# EUROPÄISCHE PATENTANMELDUNG

(11) **EP 1 635 191 A1**
(43) Veröffentlichungstag der Anmeldung: **15.03.2006**
(21) Anmeldenummer: 05107116.5
(22) Anmeldetag: 02.08.2005
(51) Int. Cl.: G01S 13/93, B60K 31/00, B60T 7/12

(54) **Vorrichtung zur Regelung der Geschwindigkeit eines Fahrzeugs**

(30) Priorität: 08.09.2004 DE 102004043358
(71) Anmelder: ROBERT BOSCH GMBH, 70442 Stuttgart (DE)
(72) Erfinder: Zimmermann, Uwe, 71686 Remseck (DE); Pruksch, Achim, 74861 Neudenau (DE)

(57) **Zusammenfassung**

Vorrichtung zur Regelung der Geschwindigkeit eines Fahrzeugs, das mit einer Objektdetektionssensorik ausgerüstet ist, mittels der vorausfahrende Fahrzeuge detektiert werden und in Abhängigkeit der ermittelten Messwerte die Antriebs- und Verzögerungseinrichtungen des Fahrzeugs im Sinne einer Geschwindigkeitskonstantregelung bzw. einer Abstandskonstantregelung ansteuerbar sind, wobei die Objektdetektionssensorik einen ersten Detektionsbereich aufweist, der eine hohe Reichweite aufweist, der mit zunehmender Entfernung eine größere Erfassungsbreite aufweist und der eine maximale Breite aufweist, die der eigenen Fahrspurbreite entspricht, sowie dass weitere Detektionsbereiche vorgesehen sind, die kürzere Detektionsreichweiten aufweisen und die Bereiche links und rechts des ersten Detektionsbereichs abdecken.

## Beschreibung

Die vorliegende Erfmdung betrifft eine Vorrichtung zur Regelung der Geschwindigkeit eines Fahrzeugs, das mit einer Objektdetektionssensorik ausgerüstet ist, mittels der vorausfahrende Fahrzeuge detektiert werden und in Abhängigkeit der ermittelten Messwerte die Antriebs- und Verzögerungseinrichtung eines Fahrzeugs im Sinne einer Geschwindigkeitskonstantregelung bzw. einer Abstandskonstantregelung ansteuerbar sind, wobei die Objektdetektionssensorik einen ersten Detektionsbereich aufweist, der eine hohe Reichweite aufweist, der mit zunehmender Entfernung eine größere Erfassungsbreite ausweist und der eine maximale Breite aufweist, die der eigenen Fahrspurweite entspricht, sowie dass weitere Detektionsbereiche vorgesehen sind, die kürzere Detektionsreichweiten aufweisen und die Bereiche links und rechts des ersten Detektionsbereichs abdecken.

### Stand der Technik

Aus der DE 199 34 670 A1 ist ein Objektdetektionssystem, insbesondere für ein Kraftfahrzeug, bekannt, wobei das Objektdetektionssystem aus einer Kombination von wenigstens drei Objektdetektoren besteht, die jeweils einen anderen Detektionsbereich und/oder eine andere Detekionsreichweite aufweisen.

### Kern und Vorteile der Erfindung

Der Kern der vorliegenden Erfindung ist es, ein Objektdetektionssystem anzugeben, mit dem vorherfahrende Fahrzeuge bezüglich ihrer Geschwindigkeit und ihrem Abstand zum eigenen Fahrzeug detektierbar sind, wobei das Detektionssystem derart gestaltet ist, dass nur Objekte in der eigenen Fahrspur erkannt werden.

Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise sind beiderseits des ersten Detektionsbereichs jeweils weitere Detektionsbereiche vorgesehen. Hierdurch ist es möglich, Detektionsbereiche vorzusehen, die einander nicht überlappen, wobei der erste Detektionsbereich den Fernbereich in der eigenen Fahrspur überwacht und die hierbei entstehenden, nicht abgedeckten Fahrspurbereiche zwischen der maximalen Reichweite des ersten Detektionssystems und des eigenen Fahrzeugs mittels weiteren Detektionsbereichen abgedeckt wird.

Weiterhin ist es vorteilhaft, dass in Fahrtrichtung linksseits und rechtsseits des ersten Detektionsbereichs jeweils zwei Detektionsbereiche vorgesehen sind. Je nachdem, in welcher Entfernung des Nahbereichs vorherfahrende Objekte auf der gesamten Fahrspurbreite detektiert werden sollen kann es weiterhin vorgesehen sein, neben dem ersten, zentral angeordneten Detektionsbereich weitere vier Detektionsbereiche, also zwei auf jeder Seite neben dem ersten Detektionsbereich, vorzusehen.

Weiterhin ist es vorteilhaft, dass die links und rechts neben dem ersten Detektionsbereich angeordneten weiteren Detektionsbereiche so ausgelegt werden, dass diese in etwa die eigene Fahrspur erfassen. Hierdurch ist es möglich, Fahrzeuge auf benachbarten Fahrspuren oder Objekte am Fahrbahnrand nicht zu detektieren, so dass eine Regelung lediglich in Abhängigkeit des vorausfahrenden Fahrzeugs durchführbar ist.

Weiterhin ist es vorteilhaft, dass die hohe Reichweite des ersten Detektionsbereich zwischen etwa 40 und 60 Meter liegt, wobei diese notwendige Reichweite eine Funktion der maximal vorgesehenen Betriebsgeschwindigkeit des Fahrzeugs ist, also als f(vₘₐₓ) vorgesehen ist. Diese Reichweite ist ausreichend, auch bei hohen typischen Fahrzeuggeschwindigkeiten eine zuverlässige Regelung des eigenen Fahrzeugs durchzuführen, ohne allzu starke Fahrzeugverzögerungen umsetzen zu müssen.

Weiterhin ist es vorteilhaft, dass mindestens ein Detektionsbereich, vorzugsweise jedoch alle Detektionsbereiche, seitlich scharf begrenzt sind, also eine geradlinige Begrenzung in azimutaler Richtung aufweisen, wodurch sich im wesentlichen dreieckförmige Erfassungsbereiche ergeben. Durch die Verwendung eines im wesentlichen dreieckförmigen Erfassungsbereichs ist es möglich, einen Sensor zu verwenden, der keine komplizierten Nebenkeulenunterdrückungen aufweisen muss, Dies wird beispielsweise durch den Einsatz optischer Sensoren, beispielsweise auf Basis von Lasersensoren ermöglicht.

Weiterhin ist es vorteilhaft, dass mehrere Detektionsbereiche mittels einer Sensoreinrichtung erfasst werden, wobei die Sensoreinrichtung einen Strahlteiler aufweist, mittels dem die Sende- und/oder Empfangsleistung auf mehrere Einzeldetektionsbereiche aufteilbar ist.

Weiterhin ist es vorteilhaft, dass für jeden Detektionsbereich eine eigene Sensoreinrichtung vorgesehen ist. Hierbei kann es jedoch vorteilhaft sein, dass mehrere Sensoreinrichtungen in einem gemeinsamen Gehäuse realisiert werden.

Weiterhin ist es vorteilhaft, dass die Objektdetektionseinrichtung einen Radarsensor, einen Lidarsensor, einen Videosensor, einen Ultraschallsensor oder eine Kombination aus diesen Sensorarten aufweist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: eine schematische Draufsicht auf ein Fahrzeug, das mit der erfmdungsgemäßen Sensoreinrichtung ausgestattet ist und
- Figur 2: ein schematisches Blockschaltbild einer Ausführungsform der erfindungsgemäßen Vorrichtung.

### Beschreibung von Ausführungsbeispielen

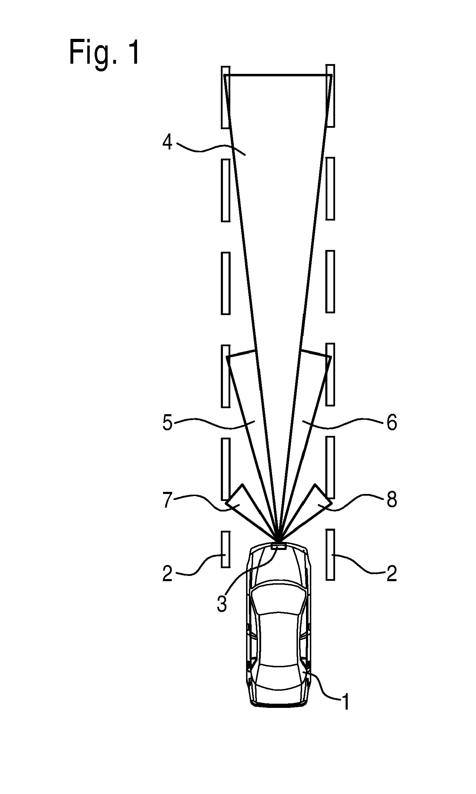

In Figur 1 ist eine Draufsicht auf ein Fahrzeug 1 dargestellt, das mit der erfmdungsgemäßen Objektdetektionseinrichtung 3 ausgestattet ist. Diese Objektdetektionseinrichtung 3 ist vorteilhafterweise an der Fahrzeugvorderseite angebracht, wodurch vorherfahrende Fahrzeuge in der eigenen Fahrspur erfasst werden können und in Abhängigkeit deren Relativgeschwindigkeit und deren Abstand zum eigenen Fahrzeug eine Geschwindigkeitsregelung des eigenen Fahrzeugs 1 durchführbar ist. Weiterhin sind Fahrspurlinien 2 dargestellt, die die Fahrspurbegrenzung der momentan durch das Fahrzeug 1 befahrenen Fahrspur 2 begrenzen. Je nach momentan befahrener Fahrspur kann es hierbei möglich sein, dass links oder rechts neben den Fahrspurbegrenzungen 2 weitere Fahrspuren angeordnet sind oder aber die Fahrspurbegrenzungen 2 auch die Breite der gesamten Fahrbahn begrenzen. Die Objektdetektionseinrichtung 3 ist hierbei derart ausgestaltet, dass ein erster Objektdetektionsbereich 4 vorgesehen ist, der seitlich scharf begrenzt ist, also eine geradlinige Begrenzung in azimutaler Richtung aufweist, wodurch sich im wesentlichen ein dreieckförmiger Erfassungsbereich ergibt und in seiner maximalen Breite des Erfassungsbereiches in etwa die Breite der eigenen Fahrspur aufweist. Da dieser erste Detektionsbereich 4 seitlich scharf begrenzt ist, also eine geradlinige Begrenzung in azimutaler Richtung aufweist, wodurch sich im wesentlichen ein dreieckförmiger Erfassungsbereich ergibt, wobei die Breite des Erfassungsbereichs mit zunehmenden Abstand vom Fahrzeug 1 größer wird, entstehen links und rechts neben dem ersten Detektionsbereich 4 weitere Bereiche innerhalb der Fahrspur 2, die von diesem ersten Detektionsbereich 4 nicht erfasst werden. Hierdurch ist es möglich, dass Objekte vor dem eigenen Fahrzeug 1 befindlich sind, die durch diesen ersten Detektionsbereich 4 nicht erkannt werden, die jedoch für die Geschwindigkeitsregelung des Fahrzeugs 1 relevant sind. Daher sind weitere Detektionsbereiche 5, 6 vorgesehen, die ebenfalls jeweils seitlich scharf begrenzt sind, also geradlinige Begrenzungen in azimutaler Richtung aufweisen, wodurch sich im wesentlichen dreieckförmige Erfassungsbereiche ergeben, und so angeordnet sind, dass diese die Bereiche innerhalb der eigenen Fahrspur 2 erfassen, die durch den kleinen Öffnungswinkel des ersten Detektionsbereichs 4 nicht abgedeckt sind. Erfindungsgemäß kann es weiter vorgesehen sein, dass neben den weiteren Detektionsbereichen 5, 6 zusätzliche Detektionsbereiche 7, 8 vorgesehen sind, die den direkten Fahrzeugumfeldbereich abdecken, um auch nahe am Fahrzeug 1 positionierte Objekte am Fahrspurrand detektieren zu können. Hierbei sind die weiteren Detektionsbereiche 5 ,6, 7, 8 in ihrer Reichweite so dimensioniert, dass in Abhängigkeit des azimutalen Abstrahlwinkels, also des Winkels zwischen der verlängerten Fahrzeuglängsachse und der Detektionsbereichszentralachse unterschiedliche Reichweiten dieser Detektionsbereiche vorgesehen sind. Hierbei sind die Reichweiten der weiteren Detektionsbereiche 5, 6, 7, 8 derart dimensioniert, dass diese lediglich die momentan befahrene Fahrspur 2 abdecken, und somit eine maximale Reichweite bis zur Fahrspurbegrenzung 2 vorgesehen ist. Durch diese Objektdetektionssensorik, bestehend aus dem ersten Detektionsbereich 4, der zentral zur Fahrzeuglängsachse angeordnet ist und eine hohe Reichweite aufweist sowie die weiteren Detektionsbereich 5, 6, 7, 8 links und rechts neben dem ersten Detektionsbereich 4, ist es möglich, das Fahrzeugsumfeld lediglich im Bereich der eigenen Fahrspur zu erfassen und hierbei mit möglichst wenigen Detektionsbereichen eine optimale Fahrspurausleuchtung zu erreichen. Die einzelnen Detektionsbereiche können hierbei durch jeweils einen eigenen Sensor erfasst werden, jedoch ist es auch möglich für alle Detektionsbereiche einen einzelnen Sensor vorzusehen, der beispielsweise mittels Strahlteilern Erfassungsbereiche in unterschiedlichen Richtungen aufweist, wodurch die unterschiedlichen Detektionsbereiche 4, 5, 6, 7, 8 entstehen. Weiterhin ist es auch möglich, verschiedene Sensorarten zu verwenden, so beispielsweise einen Radarsensor für den ersten Detektionsbereich 4 sowie Lasersensoren für die kürzeren Detektionsbereiche 5, 6 sowie 7,8.

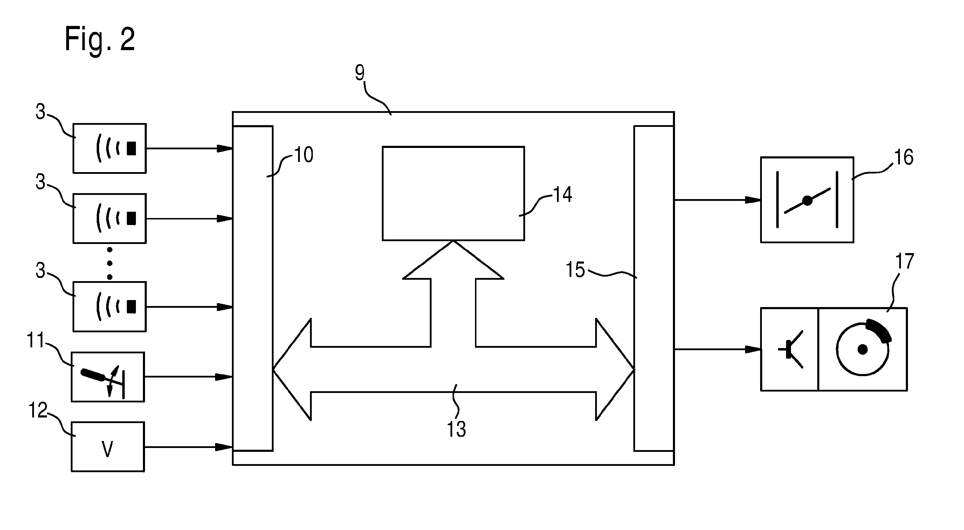

In Figur 2 ist ein schematisches Blockschaltbild der erfindungsgemäßen Vorrichtung dargestellt. Diese zeigt einen Abstands- und Geschwindigkeitsregler 9, der eine Eingangsschaltung 10 aufweist. Mittels der Eingangsschaltung 10 sind dem Abstands- und Geschwindigkeitsregler 9 Eingangssignale zuführbar, die beispielsweise von mehreren Objektsensoren 3 stammen können. In diesem Ausführungsbeispiel sind mehrere Objektsensoren 3 dargestellt, die Radar- oder Laserstrahlung aussenden und an Objekten reflektierte Teilstrahlen wieder empfangen und auswerten. Gemäß einer weiteren Ausführungsform kann es auch vorgesehen sein, lediglich einen einzigen Objektdetektionssensor vorzusehen, der Eingangssignale an die Eingangsschaltung 10 weitergibt. Weiterhin werden der Eingangsschaltung 10 Signale einer Bedieneinrichtung 11 zugeführt, mittels der durch den Fahrer das erfmdungsgemäße System ein- und ausschaltbar ist sowie fahrerspezifische Einstellungen der Regelparameter vorgenommen werden können. Weiterhin wird der Eingangsschaltung 10 ein Geschwindigkeitssignal V eines Geschwindigkeitssensors 12 zugeführt, mittels dem die eigene Fahrzeuggeschwindigkeit gemessen wird.

Hierdurch ist es möglich, die Relativgeschwindigkeiten der mittels der Objektsensorik 3 erkannten Objekte in Absolutgeschwindigkeiten umzurechnen. Die der Eingangsschaltung 10 zugeführten Eingangssignale werden mittels einer Datenaustauscheinrichtung 13 an eine Berechnungseinrichtung 14 weitergegeben. Die Berechnungseinrichtung 14 ermittelt aus den zugeführten Eingangsdaten Stellsignale für nachgeordnete Stellelemente. Aus den Relativgeschwindigkeiten der erkannten Objekte sowie deren Abstand zum eigenen Fahrzeug 1 und deren Position bezüglich des eigenen Fahrzeugs 1 werden die entsprechenden Stellsignale berechnet, wobei diese das Fahrzeug 1 beschleunigen oder verzögern können. Wurden vorherfahrende Fahrzeuge erkannt, so wird eine Geschwindigkeitsregelung im Sinne einer Abstandskonstantregelung durchgefiihrt, so dass das eigene Fahrzeug 1 den vorherfahrenden Objekten in einem Sollabstand folgt. Wurde kein vorherfahrendes Fahrzeug erkannt, so wird eine Geschwindigkeitskonstantregelung in Abhängigkeit einer vom Fahrer vorgegebenen Sollgeschwindigkeit durchgefiihrt. Die von der Berechnungseinrichtung 14 ermittelten Stellsignale werden mittels einer Datenaustauscheinrichtung 13 an eine Ausgangsschaltung 15 weitergegeben, die diese an die Stellelemente ausgibt. Als Stellelement ist einerseits ein leistungsbestimmendes Stellelement 16 einer Brennkraftmaschine vorgesehen, das beispielsweise als elektrisch ansteuerbare Drosselklappe oder als Kraftstoffmengenzumesseinrichtung eines Speichereinspritzsystems ausgeführt sein kann. Durch die Ansteuerung dieses leistungsbestimmenden Stellelements ist es möglich, die Antriebseinrichtung des Fahrzeugs derart anzusteuern, dass eine Beschleunigung des Fahrzeugs 1 im Sinne der beschriebenen Geschwindigkeitsregelung durchführbar ist. Weiterhin wird von der Ausgangsschaltung 15 ein Signal an die Verzögerungseinrichtungen 17 abgegeben, mittels dem die Verzögerungseinrichtungen des Fahrzeugs 1 ansteuerbar sind.

## Patentansprüche

1. Vorrichtung zur Regelung der Geschwindigkeit eines Fahrzeugs (1) , das mit einer Objektdetektionssensorik (3) ausgerüstet ist, mittels der vorausfahrende Fahrzeuge detektierbar sind und in Abhängigkeit der ermittelten Messwerte die Antriebs- (16) und Verzögerungseinrichtungen (17) des Fahrzeugs (1) im Sinne einer Geschwindigkeitskonstantregelung bzw. einer Abstandskonstantregelung ansteuerbar sind, **dadurch gekennzeichnet, dass** die Objektdetektionssensorik (3) einen ersten Detektionsbereich (4) aufweist, der eine hohe Reichweite aufweist, der mit zunehmender Entfernung eine größere Erfassungsbreite aufweist und der eine maximale Breite aufweist, die der eigenen Fahrspurbreite entspricht, sowie dass weitere Detektionsbereiche (5,6,7,8) vorgesehen sind, die kürzere Detektionsreichweiten aufweisen und die Bereiche links und rechts des ersten Detektionsbereichs (4) abdecken.

2. Vorrichtung nach Anspruch 1, **dadurch gekennzeichnet, dass** beiderseits des ersten Detektionsbereichs (4) jeweils weitere Detektionsbereiche (5,6,7,8) vorgesehen sind.

3. Vorrichtung nach Anspruch 2, **dadurch gekennzeichnet, dass** links und rechts des ersten Detektionsbereichs (4) jeweils 2 Detektionsbereiche (5,6,7,8) vorgesehen sind.

4. Vorrichtung nach einem der vorhergehenden Ansprüche, **dadurch gekennzeichnet, dass** die links und rechts neben dem ersten Detektionsbereich (4) angeordneten weiteren Detektionsbereiche (5,6,7,8) so ausgelegt werden, dass diese in etwa die eigene Fahrspur (2) erfassen.

5. Vorrichtung nach einem der vorhergehenden Ansprüche, **dadurch gekennzeichnet, dass** die Reichweite des ersten Detektionsbereichs (4) zwischen 40 bis 60 Meter liegt.

6. Vorrichtung nach einem der vorhergehenden Ansprüche, **dadurch gekennzeichnet, dass** mindestens ein Detektionsbereich (4) , vorzugsweise alle Detektionsbereiche (4,5,6,7,8), seitlich scharf begrenzt sind, also geradlinige Begrenzungen in azimutaler Richtung aufweisen, wodurch sich im wesentlichen dreieckförmige Erfassungsbereiche ergeben, aufweist.

7. Vorrichtung nach einem der vorhergehenden Ansprüche, **dadurch gekennzeichnet, dass** für jeden Detektionsbereich (4,5,6,7,8) eine eigene Sensoreinrichtung (3) vorgesehen ist.

8. Vorrichtung nach einem der Ansprüche 1 bis 6, **dadurch gekennzeichnet, dass** mehrere Detektionsbereiche (4,5,6,7,8) mittels einer Sensoreinrichtung (3) erfasst werden, wobei die Sensoreinrichtung (3) einen Strahlteiler aufweist, mittels dem die Sende- und/oder Empfangsleistung auf mehrere Einzeldetektionsbereiche (4,5,6,7,8) aufteilbar ist.

9. Vorrichtung nach einem der vorhergehenden Ansprüche, **dadurch gekennzeichnet, dass** die Objektdetektionseinrichtung (3) einen Radarsensor, einen Lidarsensor, einen Videosensor, einen Ultraschallsensor oder eine Kombination aus diesen Sensorarten aufweist.
